# EUROPEAN PATENT SPECIFICATION

(11) **EP 3 277 215 B1**
(45) Date of publication and mention of the grant of the patent: **22.05.2019**
(21) Application number: 16712890.9
(22) Date of filing: 31.03.2016
(51) Int. Cl.: A61C 5/62, A61C 19/06, A61C 5/64

(54) **UNIT DOSE PACKAGE**
EINHEITSDOSENVERPACKUNG
EMBALLAGE DE DOSE D'UNITÉ

(30) Priority: 02.04.2015 EP 15162460
(43) Date of publication of application: 07.02.2018
(73) Proprietor: Dentsply DeTrey GmbH, 78467 Konstanz (DE)
(72) Inventor: EVERS, Markus, 78476 Allensbach (DE); EBERHARDT, Alexandra, 78073 Bad Dürrheim (DE); GRÜTZNER, Ernst Andreas, 78479 Reichenau (DE); MATT, Nicole, 78465 Konstanz (DE); WEBER, Tillmann, 78462 Konstanz (DE); POHLE, Sven, 78467 Konstanz (DE); ELSNER, Oliver, 78315 Radolfzell (DE); FIK, Christoph P., 9215 Schönenberg an der Thur (CH)
(74) Representative: Schiener, Jens
(86) International application number: PCT/EP2016/057013
(87) International publication number: WO 2016/156461

(56) References cited:
- EP-A1- 0 261 466
- EP-A2- 1 991 155
- EP-B1- 1 843 952
- WO-A1-2007/073607
- WO-A1-2014/063848
- KR-A- 20110 010 074
- US-A1- 2005 202 365

## Description

### Field of the Invention

The present invention relates to a unit dose package for a dental composition. A generic package is known from EP1843952 B1 on which the preamble of claim 1 is based. The unit dose package may contain a single component or two or more components. The unit dose package of the present invention may be adapted for mixing two or more components. Moreover, the present invention relates to a process for the preparation of the unit dose package of the present invention.

Finally, the present invention relates to the use of the unit dose package of the present invention for stably storing a dental composition, particularly a dental adhesive.

### Background of the Invention

Dental compositions, in particular dental adhesives, require a polar solvent in order to be able to wet a tooth surface. Moreover, the solvents are required to be volatile in order to eliminate the solvent prior to curing the dental composition. Accordingly, a dental adhesive composition may comprise an organic water soluble solvent and/or water. The organic water soluble solvent may be selected from volatile alcohols, such as ethanol, propanol, butanol and/or ketones such as acetone and methyl ethyl ketone. During storage of the dental composition the volatile solvent may pass through the packaging material. Accordingly, special packaging is required which tends to be expensive.

EP1577227 B1 discloses a capsule for storage, mixing and dispensing of materials, preferably dental materials. The capsule comprises a capsule body member that provides a main chamber and comprises a dispensing opening, a receptacle providing an auxiliary chamber, said receptacle being accommodated in said capsule body member, and an applicator member being slideably accommodated in said capsule body member.

EP1843952 B1 relates to a multicomponent foil-type container comprising a first chamber for accommodating a first component, at least one second chamber for accommodating a second component, a discharge duct that can be connected to said chambers, deflection elements for mixing the components within the discharge duct and a seal which prevents the components from being mixed before being used and can be opened for discharging the components. The chambers are constructed in two half-shells, which are produced from a flexible but nevertheless dimensionally stable material. The two half-shells can be filled and then assembled together. The seal for preventing mixing of the components before use is formed by one or more separating films arranged between the two chambers.

EP1991155 discloses a capsule for storing and dispensing dental material. The capsule comprises a cartridge for the dental material, and a nozzle. The nozzle is pivotable with respect to the cartridge between a first position in which the capsule is closed for storage and a second position in which the capsule is opened for dispensing the dental material. One of the nozzle and the cartridge comprises a bearing member and the other one of the nozzle and the cartridge comprises a bearing shell, wherein the bearing member and bearing shell form a pivot.

The capsule according to EP1991155 is problematic in that the pivot assembly is rather bulky and, therefore, obstructs the vision of the practitioner. Moreover, the nozzle represents a lever which may inadvertently change the position when used in a dental procedure.

### Summary of the Invention

It is the problem of the present invention to provide a unit dose package which is suitable for dispensing a dental composition, which allows stable storage of the dental composition and which occupies inside the dental cavity a small area in the viewing direction, so that it can be used under direct visual control, avoiding the need of optical imaging systems.

Moreover, it is the problem of the present invention to provide a process for the preparation of the unit dose package of the present invention.

The present invention provides a unit dose package for a dental composition, comprising:
a) a rigid support member having a proximal end and a distal end, the rigid support member supporting one or more storage compartments for the dental composition and providing fluid flow communication between the one or more storage compartments and one or more discharge orifices, wherein the one or more storage compartments each have a volume of 10 µl to 1000 µl, and
b) a discharge conduit having a longitudinal axis extending from a proximal end to a distal end, the discharge conduit being rotatably attached to the distal end of the rigid support member for rotation around its longitudinal axis,
wherein the attachment of the discharge conduit (b) and the rigid support member (a) is provided by two-component injection molding;
whereby fluid flow communication between the discharge conduit and the one or more storage compartments may be established by rotating the discharge conduit around its longitudinal axis relative to the rigid support member from a first position to a second position and whereby the fluid flow communication between the discharge conduit and the one or more storage compartments may be interrupted by rotating the discharge conduit around its longitudinal axis relative to the rigid support member from the second position to the first position, wherein the one or more storage compartments are provided by flexible films made of composite material films, which are attached to the rigid support member.

Moreover the present invention provides a process for the preparation of a unit dose package according to the present invention, wherein the support member and at least a first member of the discharge conduit are made by two component injection molding, whereby at least the first member of the discharge conduit and the support member are made of different resin materials.

Finally, the present invention provides a use of the unit dose package for stably storing a dental composition selected from a dental adhesive composition, a desensitizer, a pit and fissure sealant and a protective varnish.

The unit dose package of the present invention provides a convenient and simple way of dispensing a dental composition, has good sealing properties and provides stable storage of dental compositions. The unit dose package of the present invention provides stable storage of dental compositions having a low viscosity, in particular dental compositions containing one or more volatile solvents selected from alcohols, ketones and water, for two years at a temperature between 2-28 °C.

The unit dose package of the present invention comprises a rigid support member and a discharge conduit. The discharge conduit is rotatable around its longitudinal axis relative to the rigid support member between a first position, in which the unit dose package is closed for storage, and a second position, in which the unit dose package is open for dispensing. When the unit dose package is closed for storage, the single unit dose is in the non-activated state. When the unit dose package is opened for dispensing, the unit dose package is in the activated state. The rigid support member and the discharge conduit cooperate so that by rotating the discharge conduit around its longitudinal axis relative to the rigid support member, fluid flow communication between the discharge conduit and the one or more storage compartments may be established in a second position and the fluid flow communication between the discharge conduit and the one or more storage compartments may be interrupted by rotating the discharge conduit to a first position.

The present invention is based in the recognition that the storage problem of the unit dose package due to the low viscosity and high volatility of the dental composition may be solved by a specific combination of a rigid support member including one or more storage compartments and a specific discharge conduit which are assembled so that the unit dose package has rigidity, tightness, compactness and a small cross section in the viewing direction along the longuitudinal axis. Accordingly, the storage problem may be solved while at the same time the unit dose package can be used under direct visual control, avoiding the need of optical imaging systems.

### Brief Description of the Figures

Figure 1 is a perspective side view of a preferred embodiment of the unit dose package according to the present invention.
Figure 2 is a cross-sectional side view of the preferred embodiment of the unit dose package according to the present invention shown in figure 1.
Figure 3 is a cross-sectional view of a preferred embodiment of the rigid support member and of the discharge conduit of the unit dose package of the present invention.

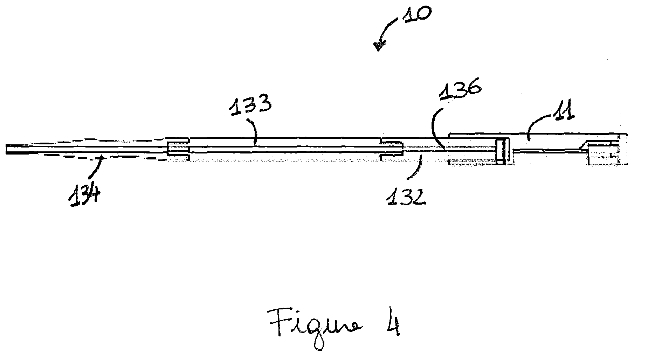

Figure 4 is a cross sectional view of a preferred embodiment of the unit dose package of the present invention.
Figure 5 is a top view of the rigid support member with the discharge conduit in the activated state for the unit dose package according to the present invention.
Figure 6 is a top view of the rigid support member with the discharge conduit in the not activated state for the unit dose package according to the present invention.
Figure 7 is a perspective view of the rigid support member of the unit dose package in a preferred embodiment of the unit dose package according to the present invention.
Figure 8 is a cross-sectional view of the storage compartments in a preferred embodiment of the unit dose package of the present invention.

### Description of the Preferred Embodiments

The present invention provides a unit dose package for a dental composition. The dental composition is preferably a dental composition having a low viscosity. In particular a dental composition having a dynamic viscosity at 23 °C of at most 1 Pas, preferably of at most 100 mPas, more preferably of at most 50 mPas. The dental composition contains preferably one or more solvents selected from water, alcohols or ketones. The dental composition is preferably one selected from a dental adhesive, a desensitizer, a pit and fissure sealant and a protective varnish. Preferably the dental composition is a dental adhesive, more preferably a dental adhesive containing one or more solvents selected from alcohols, ketones and water. In a preferred embodiment the dental composition is a dental adhesive containing one or more solvents selected from 1-propanol, 2-propanol, ethanol, t-butanol, methylethylketone, acetone and water. In a more preferred embodiment of the present invention the dental composition is a dental adhesive containing acetone.

The unit dose package according to the present invention may preferably hold a dental composition that may be a one-component dental composition. The unit dose package according to the present invention may also hold a dental composition being a two component composition or multiple component composition, whereby the two or multiple components of the dental composition are stored in separate storage compartments in the unit dose package and mixed when the two or multi-components dental composition is dispensed.

The unit dose package for a dental composition comprises a rigid support member having a proximal end and a distal end. The rigid support member supports one or more storage compartments for the components of the dental composition. The rigid support member further provides fluid flow communication between the one or more storage compartments and one or more discharge orifices. In the case the unit dose package comprises more than one storage compartment, the storage compartments are separated before activation of the unit dose package.

The unit dose package for a dental composition further comprises a discharge conduit having a longitudinal axis extending from a proximal end to a distal end. The discharge conduit is rotatably attached to the distal end of the rigid support member for rotation around its longitudinal axis. Preferably, the attachment of the discharge conduit and the rigid support member is provided by two-component injection molding. Accordingly, the rigid support member is preferably made of polyethylene or polypropylene resin material. The discharge conduit is preferably made of a material selected from polyamide resin or PBT resin.

According to the present invention, fluid flow communication between the discharge conduit and the one or more storage compartments may be established by rotating the discharge conduit around its longitudinal axis relative to the rigid support member from a first position to a second position.

Moreover, according to the present invention, fluid flow communication between the discharge conduit and the one or more storage compartments may be interrupted by rotating the discharge conduit around its longitudinal axis relative to the rigid support member from the second position to the first position.

The one or more storage compartments of the unit dose package of the present invention are provided by flexible films attached to the rigid support member.

The discharge conduit may be received in a rotation symmetrical recess of the rigid support member, wherein one or more discharge orifices are provided.

According to a preferred embodiment, the discharge conduit may be received in a recess portion which is a cylindrical recess portion having one or more discharge orifices at the cylindrical side walls thereof.

Preferably, the discharge conduit comprises a discharge channel extending from the distal end to the proximal end the front side of which is closed, whereby the fluid flow communication is provided at the proximal end by one or more orifices provided at the side wall of the discharge channel.

The discharge conduit may further comprise a first member attached to the rigid support member and a second member attached to distal end of the first member so that permanent fluid flow communication is provided between the first member and the second member.

In a preferred embodiment of the present invention, the discharge conduit further comprises a third member attached to the second member so that permanent fluid flow communication is provided between the third member and the second member.

The second member may be rotated relative to the first member around the longitudinal axis of the discharge conduit, whether the second member is attached to a third member or not.

Preferably, the discharge conduit comprises a static mixer.

According to a preferred embodiment, the support member may further comprise one or more orifices at the proximal end which provide fluid flow communication with the one or more storage compartments during filling of the unit dose package system.

The one or more orifices at the proximal end of the support member may be sealed by a cap.

According to a preferred embodiment, the unit dose package contains a dental composition having a dynamic viscosity of at most 1 Pas (23 °C), preferably of at most 100 mPas (23 °C).

According to a preferred embodiment, the dental composition contains one or more solvents. The solvents may be selected from water, alcohols or ketones. The dental composition is preferably selected from a dental adhesive, a desensitizer, a pit and fissure sealant and a protective varnish.

According to a preferred embodiment of the unit dose package for a dental composition, the dental composition is a dental adhesive containing one or more solvents selected from water, alcohols and ketones. In a more preferred embodiment of the unit dose package of the present invention, the dental composition is a dental adhesive, preferably a dental adhesive containing one or more solvents selected from t-butanol, ethanol, 1-propanol, 2-propanol, water, methylethylketone and acetone. More preferably, the dental composition is a dental adhesive containing acetone.

The present invention provides a process for the preparation of a unit dose package of the present invention, wherein the support member and at least a first member of the discharge conduit are made by two component injection molding, whereby at least the first member of the discharge conduit and the support member are made of different resin materials.

Further the present invention provides the use of the single unit dose of the present invention for stably storing a dental composition selected from a dental adhesive composition, a desensitizer, a pit and fissure sealant and a protective varnish. In a preferred embodiment the unit dose package of the present invention is used for stably storing dental adhesives.

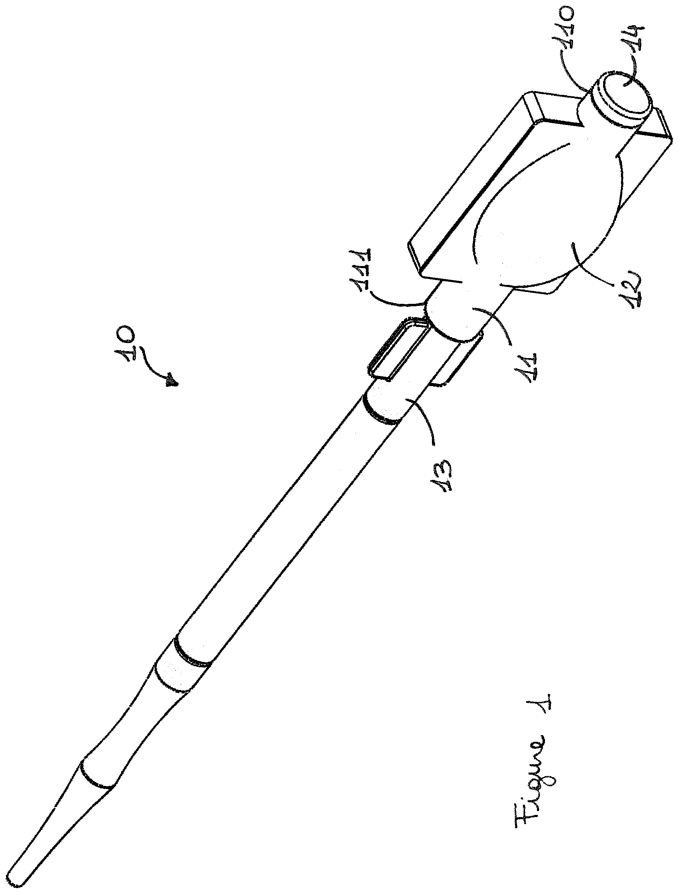

Figure 1 shows a perspective side view of a unit dose package 10 for a dental composition according to a preferred embodiment of the present invention. The unit dose package comprises a rigid support member 11.

The rigid support member 11 may be made of any material suitable for storing and dispensing a dental composition. Preferably, the rigid support member 11 is made of a plastic material. A preferred example of a plastic material is selected from polyethylene (PE) or polypropylene (PP). In view of the nature of the dental compositions in the unit dose package, the selection of the material of the rigid support member 11 is relevant for fulfilling the requirements such as with regard to the shielding of the dental composition against environment, the sealing property of the material in view of the low viscosity, solvents and components in the dental composition, and the stabilization of the dental composition by oxygen transferred from the environment into the dental composition.

The rigid support member 11 has a proximal end 110 and a distal end 111. The proximal end may be associated with a cap 14. The distal end 111 is associated with a discharge conduit 13.

The rigid support member 11 supports one or more storage compartments 12 for the dental composition and provides fluid flow communication between the one or more storage compartments 12 and one or more discharge orifices 114. The volume of the one or more storage compartments 12 is not particularly limited as long as a unit dose package having favourable handling and sealing properties may be provided. The one or more storage compartments each have a volume of 10 µl to 1000 µl, preferably 20 µl to 450 µl, still more preferably 30 µl to 200 µl, and still more preferably 50 µl to 100 µl.

The one or more storage compartments 12 are provided by flexible films attached to an outer shell of the rigid support member 11. The nature of the flexible films is not particularly limited as long as the flexible films provide good barrier properties against the moisture and the oxygen and ensure good sealing properties. The flexible films are made of composite films. Preferably, the flexible films are composite films selected from polyethylene/aluminum/polyethylenterephthalate (PE/AI/PET), polypropylene/aluminum/polyethyleneterephthalate(PP/AI/PET), polyethylene/ aluminum/oriented polyamide (PE/AI/oPA), polypropylene/aluminum/oriented polyamide (PP/AI/oPA). The use of a composite film comprising aluminum provides for light protection without the need of colouring the films. The flexible films made of composite material films are attached to the rigid support member by a plastic welding process. Plastic welding relates to a welding process for semi-finished plastic materials is described in ISO 472 (Plastics-Vocabulary, ISO 472 International Organization for Standardization, Switzerland, 1999) as a process of uniting softened surfaces of materials, generally with the aid of heat (except solvent welding). Welding of thermoplastics is accomplished in three sequential stages, namely surface preparation, application of heat and pressure, and cooling. The plastic welding process used according to the present invention is preferably a heat sealing process. Heat sealing is a process of sealing one thermoplastic to another similar thermoplastic using heat and pressure. The direct contact method of heat sealing utilizes a constantly heated die or sealing bar to apply heat to a specific contact area or path to seal or weld the thermoplastics together. Preferably, the flexible films made of composite material films are attached to the rigid support member without using an adhesive.

The rigid support member comprises a discharge conduit 13 having a longitudinal axis extending from a proximal end 130 to a distal end 131. The discharge conduit 13 is rotatably attached to the distal end 111 of the rigid support member 11 for rotation around its longitudinal axis.

The fluid flow communication between the discharge conduit 13 and the one or more storage compartments 12 may be established by rotating the discharge conduit 13 around its longitudinal axis relative to the rigid support member 11 from a first position to a second position. The fluid flow communication between the discharge conduit 13 and the one or more storage compartments 12 may be interrupted by rotating the discharge conduit 13 around its longitudinal axis relative to the rigid support member 11 from the second position to the first position.

When the discharge conduit closes the discharge orifices of the rigid support member the passage of fluids from the one or more storage compartments to the discharge conduit is not possible. This state of the unit dose package is also indicated as non-activated state. In the non-activated state the filling with the dental composition of the one or more storage compartments is possible.

When the discharge conduit opens the discharge orifices of the rigid support member, the passage of fluids from the one or more storage compartments to the discharge conduit is possible. Thus, fluid communication between the one or more storage compartments and the discharge conduit is established. This state of the unit dose package is also indicated as activated state. In the activated state the dispensing of the dental composition is possible.

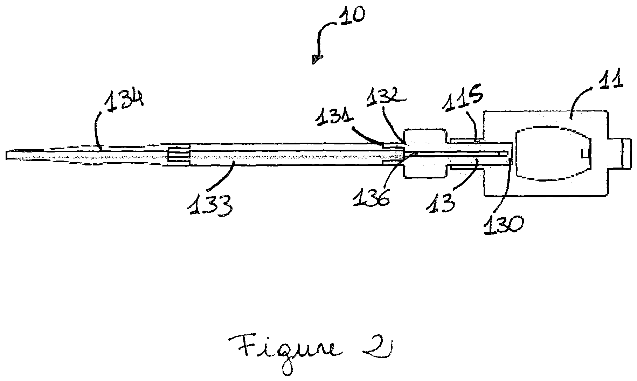

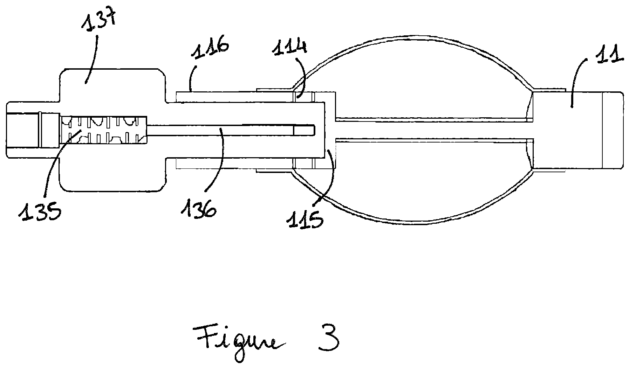

As shown in Figures 2 and 3, according to a preferred embodiment, the discharge conduit 13 is received in a rotation symmetrical recess 115 of the rigid support member 11, wherein one or more discharge orifices are provided 114. Preferably, the discharge conduit 13 is received in a recess portion 115 which is a cylindrical recess portion having one or more discharge orifices 114 at the cylindrical side walls 116 thereof.

According to a preferred embodiment of the present invention, the discharge conduit 13 comprises a discharge channel 136 extending from the distal end 131 to the proximal end 130 the front side of which is closed, whereby the fluid flow communication is provided at the proximal end 130 by one or more orifices 114 provided at the side wall 116 of the discharge channel 136.

Preferably, the discharge conduit 13 comprises a first member 132 attached to the rigid support member 11 and a second member 133 attached to the distal end of the first member 132 so that permanent fluid flow communication is provided between the first member 132 and the second member 133. The second member may be attached to the first member by means of a slot and key system.

The discharge conduit 13 may further comprise a third member 134 attached to the second member 133 so that permanent fluid flow communication is provided between the third member 134 and the second member 133. The third member may be attached to the second member by means of a slot and key system.

The third member may be an elongated part which may comprise at its free end a dispensing tip. The dispensing tip may be provided with every appropriate application system, such as a sponge, a flock or a brush. The application system may be glued to the dispensing tip with, for example, an epoxy resin. The application system may also be shaped as a ball having, for example, tiny hair made of thermoplastic materials and be co-molded.

The second member 133 may be rotated relative to the first member 132 around the longitudinal axis of the discharge conduit 13, whether the second member is attached to a third member or not.

As shown in Figure 3, the discharge conduit 13 may comprise a static mixer 135. The static mixer mixes the materials stored in the one or more storage compartments as they are dispensed from the cartridge. The static mixer may be any static mixer as long as it provides continuous mixing of the materials. Preferably the static mixer has a cylindrical or squared housing. More preferably the static mixer has a cylindrical housing. In a preferred embodiment of the present invention, the static mixer has a cylindrical housing with helical sections.

In the Figure 3 the discharge conduit in the not activated state is shown, i.e. the discharging channel between the one or more storage compartments and the discharge conduit is closed and the fluid flow communication between the one or more storage compartments and the discharge conduit is interrupted.

The discharge conduit 13 may be provided with an actuation member 137, which facilitates the rotation of the discharge conduit 13 around its longitudinal axis relative to the rigid support member 11. The actuation member may provide also visual evidence of the state, activated or non-activated, of the unit dose package.

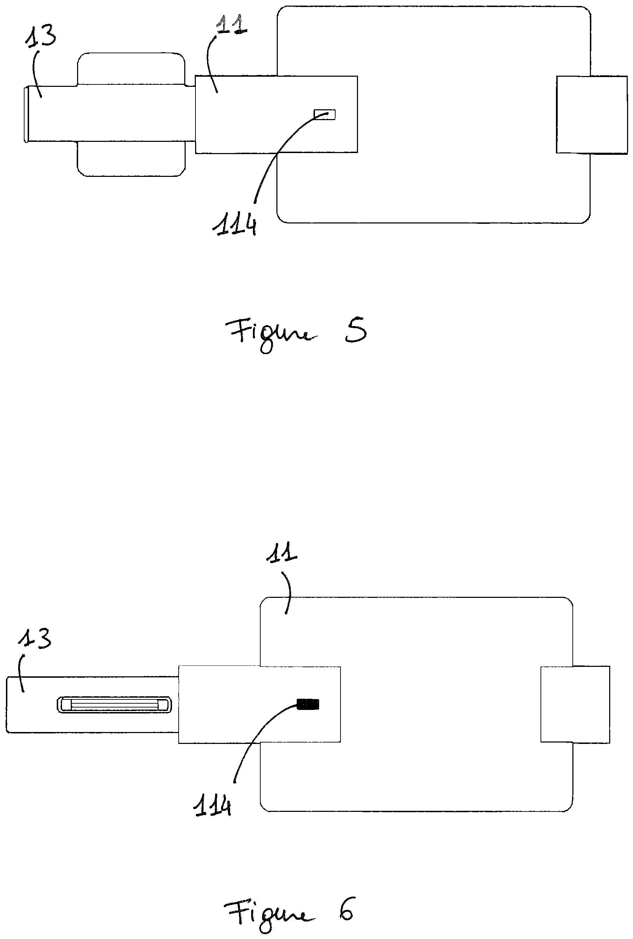

As shown by Figures 5 and 6, according to a preferred embodiment, the transition from the activated state to the non-activated state is provided by a 90° rotation of the discharge conduit 13 around its longitudinal axis relative to the rigid support member 11.

Figures 5 and 6 show respectively the activated state, in which one of the discharge orifices to the discharge conduit is open, and the non-activated state, in which one of the discharge orifices to the discharge conduit is closed.

According to a preferred embodiment, the unit dose package further comprises a tactile and/or acoustic feedback, which provides the user with confirmation of the activation of the unit dose package. A tactile feedback may be a system which offers resistance when the unit dose package is used for the first time. A tactile feedback may be a slot and key system. A tactile and/or acoustic feedback may also indicate to the user whether the unit dose package was already opened and/or manipulated.

According to a preferred embodiment, the rigid support member 11 further comprises one or more orifices 113 at the proximal end 110 which provide fluid flow communication with the one or more storage compartments 12 during filling of the unit dose package 10.

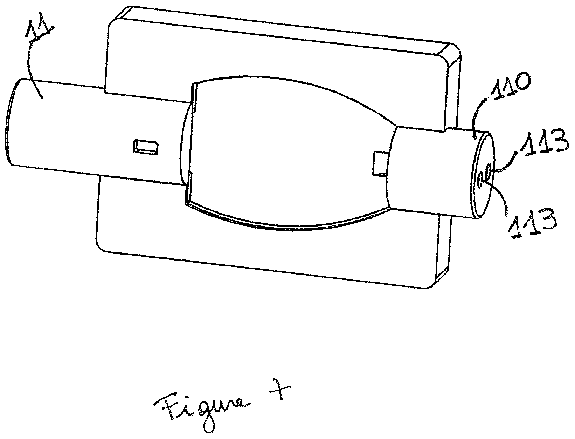

Figure 7 shows a preferred embodiment of the unit dose package 10 of the present invention. At the proximal end 110 of the rigid support member 11 are shown two orifices 113, which are provided, respectively, one for filling the storage compartment with the dental composition and the other one for discharging the air contained in the storage compartment.

In case the unit dose package 10 comprises two storage compartments 12, when the one or more discharge orifices 114 of the rigid support member 11 are closed, it is possible to fill the two storage compartments 12 in parallel by injecting in each storage compartment the dental composition through one of the two orifices 113 of each storage compartment. At the same time of the filling, the air contained in the storage compartments is discharged through the second other orifices 113 of each storage compartment.

For example by means of a cannula having a diameter of about 0,5 mm it is possible to fill through one of the orifices the corresponding storage compartment. At the same time, the air present in the compartment can escape through the air discharging orifice. In this way a unit dose package not containing air is produced. By the absence of air which, because of the extrusion of the liquid, does not stay compressed in the storage compartment, and due to the irreversibly deformable flexible foils, no recirculation effect of the air appears.

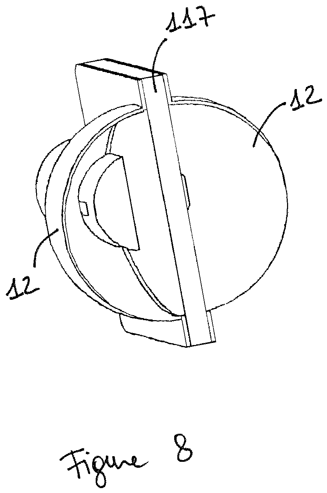

Figure 8 shows a preferred embodiment of the unit dose package of the present invention. The rigid support member supports two storage compartments 12 which are separated by a partition wall 117.

According to a preferred embodiment, the one or more orifices 113 at the proximal end 110 of the rigid support member 11 are sealed by a cap 14. The cap has preferably a number of pins corresponding to the number of orifices 113 at the proximal end 110 of the rigid support member.

The present invention also provides a process for the preparation of a unit dose package 10. The support member 11 and at least a first member of the discharge conduit 13 are made by two component injection molding, whereby at least the first member of the discharge conduit and the support member are made of different resin materials.

The discharge conduit 13 preferably is made of a plastic material having a melting point higher than polyethylene (PE) or polypropylene (PP). Preferably the plastic material of the discharge conduit is selected from polyamide (PA) and polybutyleneterephthalate (PBT). In a preferred embodiment of the present invention the discharge conduit is made of polyamide.

The rigid support member is preferably made of a plastic material selected from polyethylene (PE) and polypropylene (PP). In a preferred embodiment of the present invention the rigid support member is made of polyethylene.

According to a preferred embodiment, in the first step of the process for the preparation of a unit dose package according to the present invention the discharge conduit including the discharge channel is moulded. In a second step of the process the rigid support member is produced by moulding around the discharge conduit.

Subsequently a piston or a stamp having the same shape of the discharge channel is inserted in said discharge channel of the discharge conduit. At the same time the one or more discharging orifices in the rigid support member are produced.

By cooling of the plastic material, the rigid support member shrinks on the enclosed part of the discharge conduit and forms a proportionately thick and mechanically stable connection. Because of the incompatibility between the plastic materials chosen for the support member and the discharge conduit, there are no interactions between them and neither fusion of one of them. After removal of the injection molding system, the support member and the discharge conduit are in the activated state. By rotation of the discharge conduit around its rotational axis relative to the rigid support member the discharge channel is closed.

The unit dose package is used for dispensing a dental composition selected from a dental adhesive composition, a desensitizer, a pit and fissure sealant and a protective varnish. Preferably the unit dose package is used for dispensing dental adhesives, more preferably dental adhesives containing one or more solvents selected from t-butanol, ethanol, 1-propanol, 2-propanol, water, acetone, methylethylketone. In a preferred embodiment of the present invention, the unit dose package of the present invention is used for dispensing dental adhesives containing acetone.

## Claims

1. A unit dose package (10) for a dental composition, comprising:
(a) a rigid support member (11) having a proximal end (110) and a distal end (111), the rigid support member (11) supporting one or more storage compartments (12) for the dental composition and providing fluid flow communication between the one or more storage compartments (12) and one or more discharge orifices (114), wherein the one or more storage compartments (12) each have a volume of 10 µl to 1000 µl and
(b) a discharge conduit (13) having a longitudinal axis extending from a proximal end (130) to a distal end (131), **characterized in that**
the discharge conduit being rotatably attached to the distal end (111) of the rigid support member (11) for rotation around its longitudinal axis;
the attachment of the discharge conduit (13) (b) and the rigid support member (11) (a) is provided by two-component injection molding; and **in that** fluid flow communication between the discharge conduit (13) and the one or more storage compartments (12) may be established by rotating the discharge conduit (13) around its longitudinal axis relative to the rigid support member (11) from a first position to a second position and whereby the fluid flow communication between the discharge conduit (13) and the one or more storage compartments (12) may be interrupted by rotating the discharge conduit (13) around its longitudinal axis relative to the rigid support member (11) from the second position to the first position,
wherein the one or more storage compartments (12) are provided by flexible films made of composite material films, which are attached to the rigid support member (11).

2. The unit dose package (10) according to claim 1, wherein the composite films are selected from polyethylene/aluminum/polyethylenterephthalate (PE/AI/PET), polypropylene/aluminum/polyethyleneterephthalate(PP/AI/PET), polyethylene/ aluminum/oriented polyamide (PE/AI/oPA), polypropylene/aluminum/oriented polyamide (PP/AI/oPA).

3. The unit dose package (10) according to claim 1 or 2, wherein the flexible films made of composite material films are attached to the rigid support member (11) by a plastic welding process.

4. The unit dose package (10) according to any one of the preceding claims, wherein the discharge conduit (13) is received in a rotation symmetrical recess of the rigid support member (11), wherein one or more discharge orifices are provided.

5. The unit dose package (10) according to any one of the preceding claims, wherein the recess portion is a cylindrical recess portion having one or more discharge orifices at the cylindrical side walls thereof.

6. The unit dose package (10) according to any one of the preceding claims, wherein the discharge conduit (13) comprises a discharge channel extending from the distal end (111) to the proximal end (110) the front side of which is closed, whereby the fluid flow communication is provided at the proximal end (110) by one or more orifices provided at the side wall of the discharge channel.

7. The unit dose package (10) according to any one of the preceding claims, wherein the discharge conduit (13) comprises a first member attached to the rigid support member (11) and a second member attached to distal end (111) of the first member so that permanent fluid flow communication is provided between the first member and the second member.

8. The unit dose package (10) according to claim 5, wherein the discharge conduit (13) further comprises a third member attached to the second member so that permanent fluid flow communication is provided between the third member and the second member is provided.

9. The unit dose package (10) according to claim 5 or 6, wherein the second member may be rotated relative to the first member around the longitudinal axis of the discharge conduit (13).

10. The unit dose package (10) according to any one of the preceding claims, wherein the discharge conduit (13) comprises a static mixer (135).

11. The unit dose package (10) according to any one of the preceding claims, wherein the support member further comprises one or more orifices (113) at the proximal end (110), which provide fluid flow communication with the one or more storage compartments (12) during filling of the unit dose package (10) system, preferably wherein the one or more orifices at the proximal end (110) of the support member are sealed by a cap (14).

12. The unit dose package (10) according to any one of the preceding claims, which contains a dental composition having a dynamic viscosity of at most 1 Pas (23 °C), preferably which contains a dental composition having a dynamic viscosity of at most 100 mPas (23 °C).

13. The unit dose package (10) according to claim 10, wherein the dental composition is a dental adhesive containing one or more solvents selected from alcohols, ketones and water; or comprising a dispensing tip provided with an application system selected from a sponge, a flock and a brush.

14. Process for the preparation of a unit dose package (10) as defined in to any one of the preceding claims, wherein the support member and at least a first member of the discharge conduit (13) are made by two component injection molding, whereby at least the first member of the discharge conduit (13) and the support member (11) are made of different resin materials.

15. Use of the unit dose package (10) according to any of claims 1 to 12 for stably storing a dental composition selected from a dental adhesive composition, a desensitizer, a pit and fissure sealant and a protective varnish.

## Patentansprüche

1. Einzeldosispackung (10) für eine zahnärztliche Zusammensetzung, umfassend:
(a) starres Stützelement (11) mit einem proximalen Ende (110) und einem distalen Ende (111), wobei das starre Stützelement (11) ein oder mehrere Staufächer (12) für die zahnärztliche Zusammensetzung stützt und Fluid-Strömungsaustausch zwischen dem einen oder mehreren Staufächern (12) und einer oder mehreren Abflussöffnungen (114) bereitstellt, wobei das eine oder mehrere Speicherfächer (12) jeweils ein Volumen zwischen 10 µl und 1000 µl haben, und
(b) Abflussleitung (13) mit einer Längsachse, die sich von einem proximalen Ende (130) zu einem distalen Ende (131) erstreckt, **dadurch gekennzeichnet, dass**
die Abflussleitung drehbar am distalen Ende (111) des starren Stützelements (11) angebracht ist für Drehbarkeit rund um dessen Längsachse;
die Anbringung der Abflussleitung (13) (b) und des starren Stützelements (11) (a) bereitgestellt wird durch Spritzgießen von zwei Komponenten; und dadurch, dass Fluid-Strömungsaustausch zwischen der Abflussleitung (13) und dem einen oder mehreren Staufächern (12) eingerichtet werden kann durch Drehen der Abflussleitung (13) um ihre Längsachse relativ zum starren Stützelement (11) aus einer ersten Position in eine zweite Position und wodurch der Fluid-Strömungsaustausch zwischen der Abflussleitung (13) und dem einen oder mehreren Staufächern (12) unterbrochen werden kann durch Drehen der Abflussleitung (13) um ihre Längsachse relativ zum starren Stützelement (11) aus der zweiten Position in die erste Position, wobei das eine oder mehrere Staufächer (12) bereitgestellt werden durch flexible Folien, hergestellt aus Kompositmaterialfolien, welche am starren Stützelement angebracht sind (11).

2. Einzeldosispackung (10) nach Anspruch 1, wobei die Kompositfolien ausgewählt werden aus Polyethylen/Aluminium/Polyethylenterephthalat (PE/Al/PET), Polypropylen/Aluminium/Polyethylenterephthalat (PP/Al/PET), Polyethylen/Aluminium/orientiertem Polyamid (PE/Al/oPA), Polypropylen/Aluminium/orientiertem Polyamid (PP/Al/oPA).

3. Einzeldosispackung (10) nach Anspruch 1 oder 2, wobei die aus Kompositmaterialfolien hergestellten flexiblen Folien am starren Stützelement (11) durch ein Plastikschweißverfahren angebracht sind.

4. Einzeldosispackung (10) nach einem der vorstehenden Ansprüche, wobei die Abflussleitung (13) in einer drehsymmetrischen Aussparung des starren Stützelements (11) entgegengenommen wird, wobei eine oder mehrere Abflussöffnungen bereitgestellt sind.

5. Einzeldosispackung (10) nach einem der vorstehenden Ansprüche, wobei der Aussparungsabschnitt ein zylindrischer Aussparungsabschnitt ist, der über eine oder mehrere Abflussöffnungen an den zylindrischen Seitenwänden davon verfügt.

6. Einzeldosispackung (10) nach einem der vorstehenden Ansprüche, wobei die Abflussleitung (13) einen Abflusskanal umfasst, der sich vom distalen Ende (111) zum proximalen Ende (110) erstreckt, dessen Vorderseite geschlossen ist, wodurch Fluid-Strömungsaustausch bereitgestellt ist am proximalen Ende (110) durch eine oder mehrere Öffnungen, die an der Seitenwand des Abflusskanals bereitgestellt sind.

7. Einzeldosispackung (10) nach einem der vorstehenden Ansprüche, wobei die Abflussleitung (13) ein erstes Element, angebracht am starren Stützelement (11), und ein zweites Element umfasst, angebracht am distalen Ende (111) des ersten Elements, sodass permanenter Fluid-Strömungsaustausch zwischen dem ersten Element und dem zweiten Element bereitgestellt wird.

8. Einzeldosispackung (10) nach Anspruch 5, wobei die Abflussleitung (13) ferner ein drittes Element umfasst, angebracht am zweiten Element, sodass permanenter Fluid-Strömungsaustausch zwischen dem dritten Element und dem zweiten Element bereitgestellt wird.

9. Einzeldosispackung (10) nach Anspruch 5 oder 6, wobei das zweite Element relativ zum ersten Element rund um die Längsachse der Abflussleitung (13) gedreht werden kann.

10. Einzeldosispackung (10) nach einem der vorstehenden Ansprüche, wobei die Abflussleitung (13) einen Statikmischer (135) umfasst.

11. Einzeldosispackung (10) nach einem der vorstehenden Ansprüche, wobei das Stützelement ferner eine oder mehrere Öffnungen (113) am proximalen Ende (110) umfasst, welche während des Befüllens des Einzeldosispackungs-Systems (10) Fluid-Strömungsaustausch mit dem einen oder mehreren Staufächern (12) bereitstellen, wobei vorzugsweise die eine oder mehreren Öffnungen am proximalen Ende (110) des Stützelements durch einen Deckel (14) abgedichtet sind.

12. Einzeldosispackung (10) nach einem der vorstehenden Ansprüche, welche eine zahnärztliche Zusammensetzung enthält, verfügend über eine dynamische Viskosität von höchstens 1 Pa·s (23 °C), und welche vorzugsweise eine zahnärztliche Zusammensetzung enthält, verfügend über eine dynamische Viskosität von höchstens 100 mPa·s (23 °C).

13. Einzeldosispackung (10) nach Anspruch 10, wobei die zahnärztliche Zusammensetzung ein zahnärztlicher Klebstoff ist, beinhaltend ein oder mehrere Lösungsmittel, ausgewählt aus Alkoholen, Ketonen und Wasser; oder umfassend eine Dosierspitze, bereitgestellt mit einem Anwendungssystem, ausgewählt aus: Schwamm, Stippe und Bürste.

14. Verfahren zur Zubereitung einer Einzeldosispackung (10), wie definiert in einem der vorstehenden Ansprüche, wobei das Stützelement und zumindest ein erstes Element der Abflussleitung (13) hergestellt werden durch Spritzgießen von zwei Komponenten, wodurch zumindest das erste Element der Abflussleitung (13) und das Stützelement (11) aus unterschiedlichen Harzmaterialien hergestellt sind.

15. Einsatz der Einzeldosispackung (10) nach einem der Ansprüche 1 bis 12 zum beständigen Aufbewahren einer zahnärztlichen Zusammensetzung, ausgewählt aus: zahnärztlicher Klebstoffzusammensetzung, Desensibilisierungsmittel, Loch- und Fissurdichtungsmittel und Schutzlack.

## Revendications

1. Emballage de dose unitaire (10) pour une composition dentaire, comprenant :
(a) un élément de support rigide (11) ayant une extrémité proximale (110) et une extrémité distale (111), l'élément de support rigide (11) supportant un ou plusieurs compartiments de stockage (12) pour la composition dentaire et assurant une communication d'écoulement fluidique entre l'un ou plusieurs compartiments de stockage (12) et un ou plusieurs orifices d'évacuation (114), dans lequel l'un ou plusieurs compartiments de stockage (12) ont chacun un volume de 10 µl à 1000 µl, et
(b) un conduit d'évacuation (13) ayant un axe longitudinal s'étendant d'une extrémité proximale (130) à une extrémité distale (131), **caractérisé en ce que**
le conduit d'évacuation est fixé avec faculté de rotation à l'extrémité distale (111) de l'élément de support rigide (11) pour une rotation autour de son axe longitudinal ;
la fixation du conduit d'évacuation (13) (b) et de l'élément de support rigide (11) (a) est assurée par un moulage par injection de deux composants ; et **en ce que** une communication d'écoulement fluidique entre le conduit d'évacuation (13) et l'un ou plusieurs compartiments de stockage (12) peut être établie par rotation du conduit d'évacuation (13) autour de son axe longitudinal par rapport à l'élément de support rigide (11) depuis une première position vers une deuxième position et une communication d'écoulement fluidique entre le conduit d'évacuation (13) et l'un ou plusieurs compartiments de stockage (12) pouvant ainsi être interrompue par rotation du conduit d'évacuation (13) autour de son axe longitudinal par rapport à l'élément de support rigide (11) depuis la deuxième position vers la première position, dans lequel l'un ou plusieurs compartiments de stockage (12) sont formés par des films souples composés de films de matériau composite, qui sont fixés à l'élément de support rigide (11).

2. Emballage de dose unitaire (10) selon la revendication 1, dans lequel les films composites sont choisis parmi polyéthylène/aluminium/polyéthylène téréphtalate (PE/Al/PET), polypropylène/aluminium/polyéthylène téréphtalate (PP/Al/PET), polyéthylène/aluminium/polyamide orienté (PE/Al/oPA), polypropylène/aluminium/polyamide orienté (PP/Al/oPA).

3. Emballage de dose unitaire (10) selon la revendication 1 ou 2, dans lequel les films souples composés de films de matériau composite sont fixés à l'élément de support rigide (11) par un procédé de soudage plastique.

4. Emballage de dose unitaire (10) selon l'une quelconque des revendications précédentes, dans lequel le conduit d'évacuation (13) est reçu dans un évidement symétrique en rotation de l'élément de support rigide (11), dans lequel un ou plusieurs orifices d'évacuation sont prévus.

5. Emballage de dose unitaire (10) selon l'une quelconque des revendications précédentes, dans lequel la partie d'évidement est une partie d'évidement cylindrique ayant un ou plusieurs orifices d'évacuation au niveau de ses parois latérales cylindriques.

6. Emballage de dose unitaire (10) selon l'une quelconque des revendications précédentes, dans lequel le conduit d'évacuation (13) comprend un canal d'évacuation s'étendant de l'extrémité distale (111) à l'extrémité proximale (110) dont le côté avant est fermé, la communication d'écoulement fluidique étant ainsi assurée au niveau de l'extrémité proximale (110) par un ou plusieurs orifices prévus au niveau de la paroi latérale du canal d'évacuation.

7. Emballage de dose unitaire (10) selon l'une quelconque des revendications précédentes, dans lequel le conduit d'évacuation (13) comprend un premier élément fixé à l'élément de support rigide (11) et un deuxième élément fixé à l'extrémité distale (111) du premier élément de sorte qu'une communication d'écoulement fluidique permanente soit assurée entre le premier élément et le deuxième élément.

8. Emballage de dose unitaire (10) selon la revendication 5, dans lequel le conduit d'évacuation (13) comprend en outre un troisième élément fixé au deuxième élément de sorte qu'une communication d'écoulement fluidique permanente soit assurée entre le troisième élément et le deuxième élément.

9. Emballage de dose unitaire (10) selon la revendication 5 ou 6, dans lequel le deuxième élément peut être tourné par rapport au premier élément autour de l'axe longitudinal du conduit d'évacuation (13).

10. Emballage de dose unitaire (10) selon l'une quelconque des revendications précédentes, dans lequel le conduit d'évacuation (13) comprend un mélangeur statique (135).

11. Emballage de dose unitaire (10) selon l'une quelconque des revendications précédentes, dans lequel l'élément de support comprend en outre un ou plusieurs orifices (113) au niveau de l'extrémité proximale (110), qui assurent une communication d'écoulement fluidique avec l'un ou plusieurs compartiments de stockage (12) pendant le remplissage du système d'emballage de dose unitaire (10), dans lequel l'un ou plusieurs orifices au niveau de l'extrémité proximale (110) de l'élément de support sont de préférence fermés hermétiquement par un capuchon (14).

12. Emballage de dose unitaire (10) selon l'une quelconque des revendications précédentes, qui contient une composition dentaire ayant une viscosité dynamique maximale de 1 Pas (23 °C), de préférence qui contient une composition dentaire ayant une viscosité dynamique maximale de 100 mPas (23 °C).

13. Emballage de dose unitaire (10) selon la revendication 10, dans lequel la composition dentaire est un adhésif dentaire contenant un ou plusieurs solvants choisis parmi les alcools, les cétones et l'eau ; ou comprenant une pointe de distribution munie d'un système d'application choisi parmi une éponge, une bourre et un pinceau.

14. Procédé de préparation d'un emballage de dose unitaire (10) tel que défini dans l'une quelconque des revendications précédentes, dans lequel l'élément de support et au moins un premier élément du conduit d'évacuation (13) sont fabriqués par moulage par injection de deux composants, au moins le premier élément du conduit d'évacuation (13) et l'élément de support (11) étant ainsi composés de différents matériaux de résine.

15. Utilisation de l'emballage de dose unitaire (10) selon l'une quelconque des revendications 1 à 12 pour stocker de façon stable une composition dentaire choisie parmi une composition d'adhésif dentaire, un agent de désensibilisation, un obturateur de puits et sillons et un vernis protecteur.
